# EUROPÄISCHE PATENTANMELDUNG

(11) **EP 2 099 122 A2**
(43) Veröffentlichungstag der Anmeldung: **09.09.2009**
(21) Anmeldenummer: 09002607.1
(22) Anmeldetag: 25.02.2009
(51) Int. Cl.: H02P 1/30

(54) **Asynchronmaschine und Verfahren zum Betreiben einer Asynchronmaschine an einem Frequenzumformer**

(30) Priorität: 04.03.2008 DE 102008014267
(71) Anmelder: C. & E. Fein GmbH, 73529 Schwäbisch-Gmünd-Bargau (DE)
(72) Erfinder: Meyer, Christoph, 70599 Stuttgart (DE)
(74) Vertreter: Gahlert, Stefan

(57) **Zusammenfassung**

Es wird eine Asynchronmaschine und ein Verfahren zum Starten einer Asynchronmaschine an einem Frequenzumformer angegeben, bei dem der Frequenzumformer mit Nennfrequenz (f_{Nenn}) zugeschaltet wird, anschließend, wenn die Asynchronmaschine innerhalb einer vorgegebenen Zeit t=t₁ nicht anläuft, der Frequenzumformer (24) auf eine niedrigere Startfrequenz fₛₜₐᵣₜ und/oder Startspannung Uₛₜₐᵣₜ abgesenkt wird, bis der Strom I unter einen beim Anlaufen zulässigen Maximalstrom I₀ absinkt, und anschließend die Frequenz f und/oder die Spannung U wieder erhöht wird, bis die Asynchronmaschine anläuft.

## Beschreibung

Die Erfindung betrifft Asynchronmaschinen, die mittels eines Frequenzumformers betrieben werden. Bei stark belasteten Elektrowerkzeugen werden zum Antrieb Asynchronmaschinen verwendet, die über einen Frequenzumformer (Frequenzumrichter) betrieben werden. Dies hat gegenüber herkömmlichen Elektrowerkzeugen den Vorteil einer deutlich höheren Robustheit und Lebensdauer, da Schleifkontakte vollständig entfallen und höhere Leistungen mit weniger Verlusten erzeugt werden können. Solche Elektrowerkzeuge sind als so genannte "HF-Werkzeuge" bekannt. Sie werden in der Regel mit einer Nennfrequenz von z.B. etwa 200 bis 300 Hertz und einer Nennspannung von z.B. 200 Volt betrieben.

Von einem Frequenzumformer (meist statischer Frequenzumformer) können eine oder mehrere Asynchronmaschinen versorgt werden.

Normalerweise läuft die Asynchronmaschine beim Einschalten an. In seltenen Fällen kann es jedoch vorkommen, dass die Asynchronmaschine nicht anläuft oder nicht ordnungsgemäß anläuft. Dies kann insbesondere bei großen Maschinen vorkommen, verstärkt im Winter, wenn die Maschinen kalt sind und ein erhöhter Widerstand z.B. durch zähes Fett besteht. Diese führt zu einer sehr hohen Stromaufnahme und ggf. zu einer Beschädigung des Läufers.

Um das Anlaufproblem zu umgehen, wird im Stand der Technik in der Regel zunächst mit niedriger Frequenz und niedriger Spannung des Frequenzumformers angefahren. Wird mit einer solchen Asynchronmaschine jedoch beispielsweise ein Winkelschleifer betrieben (was der Hauptanwendungsfall ist), so führt dies bei einem noch im Lauf befindlichen, aber ausgeschalteten Winkelschleifer zu einem Bremsmoment, was ggf. zum Lösen der Schleifscheibe führen kann. Außerdem gestaltet sich das Anfahren grundsätzliche relativ langsam, da immer zunächst mit niedriger Frequenz und niedriger Spannung des Frequenzumformers begonnen wird, so dass nur ein allmähliches Hochfahren der Drehzahl möglich ist.

Aus der US 6,320,286 B1 ist ein Elektrowerkzeug mit einer Asynchronmaschine und einem im Gehäuse integrierten Frequenzumformer bekannt. Der Frequenzumformer wird über einen mikroprozessorgesteuerten Kontroller gesteuert und beinhaltet einen Sanftanlauf. Hierzu wird der Motor grundsätzlich mit einer niedrigen Frequenz und einer niedrigen Spannung gestartet und nach und nach hochgeschaltet.

Dies ist eine grundsätzliche Möglichkeit, ein Anlaufen der Asynchronmaschine sicherzustellen, jedoch führt diese Art des Anfahrens in den meisten Fällen zu unnötigen Zeitverlusten, die sich in einer Begrenzung der Arbeitsproduktivität bemerkbar machen, wenn in einem Produktionsbetrieb mit zahlreichen HF-Werkzeugen gearbeitet wird. Auch besteht das zuvor erwähnte, grundsätzliche Problem der Abbremsung beim Einschalten von auslaufenden Winkelschleifern.

Der Erfindung liegt somit die Aufgabe zugrunde, ein verbessertes Verfahren zum Betreiben einer Asynchronmaschine an einem Frequenzumformer zu schaffen, das einen möglichst sicheren Betrieb der Asynchronmaschine erlaubt. Dabei sollen insbesondere beim Starten der Asynchronmaschine Probleme vermieden werden. Ferner soll eine Asynchronmaschine angegeben werden, die an einem Frequenzumformer sicher und schnell anläuft. Schließlich soll ein Elektrowerkzeug mit einer derartigen Asynchronmaschine angegeben werden.

Diese Aufgabe wird durch ein Verfahren zum Betreiben einer Asynchronmaschine an einem Frequenzumformer gelöst, bei dem der Frequenzumformer, wenn die Asynchronmaschine innerhalb einer vorgegebenen Zeit nicht anläuft, auf eine niedrigere Startfrequenz und/oder Startspannung abgesenkt wird, bis der Strom unter einen beim Anlaufen zulässigen Maximalstrom absinkt, und anschließend die Frequenz und/oder die Spannung wieder erhöht wird, bis die Asynchronmaschine anläuft.

Die Aufgabe wird ferner durch eine Asynchronmaschine mit einem Frequenzumformer gelöst, mit einer Steuereinheit, die dazu ausgebildet ist, wenn die Asynchronmaschine beim Einschalten innerhalb einer vorgegebenen Zeit nicht anläuft, den Frequenzumformer auf eine niedrigere Startfrequenz und/oder Startspannung abzusenken, bis der Strom unter einen beim Hochlaufen zulässigen Maximalstrom absinkt, und anschließend die Frequenz und/oder die Spannung wieder zu erhöhen, bis die Asynchronmaschine anläuft.

Die Aufgabe der Erfindung wird ferner durch ein Elektrowerkzeug mit einer derartigen Asynchronmaschine gelöst.

Die Aufgabe der Erfindung wird auf diese Weise vollkommen gelöst, da die Asynchronmaschine in den Fällen, in denen sie beim Einschalten sogleich anläuft, schnellstmöglich auf die Leerlaufdrehzahl hochgefahren wird. Läuft die Maschine noch, während sie eingeschaltet wird, so wird ein abruptes Abbremsen der Maschine und damit die Gefahr eines Lösens der Schleifscheibe vermieden, sofern mit dem Asynchronmotor ein Schleifer etwa in Form eines Winkelschleifers angetrieben wird.

Läuft die Maschine jedoch nicht innerhalb eines vorgegebenen Zeitrahmens an, so wird die Frequenz und/oder die Spannung des Frequenzumformers so lange abgesenkt, bis der Strom auf einen zulässigen Maximalwert abgesunken ist, was ein erstes Anlaufen der Maschine auslöst, so dass anschließend die Frequenz und/oder Spannung des Frequenzumformers wieder bis auf den Nennwert in definierter Weise hochgefahren werden können, bis die Leerlaufdrehzahl der Asynchronmaschine erreicht ist.

Vorzugsweise wird der Frequenzumformer mit Nennfrequenz betrieben. Dadurch wird ein möglichst schnelles Hochfahren des Asynchronmotors erreicht und gleichzeitig ein Abbremsen der Maschine vermieden, wenn eine sich noch im Laufen befindliche Asynchronmaschine eingeschaltet wird.

In bevorzugter Weiterbildung der Erfindung wird der Strom dann, wenn die Asynchronmaschine innerhalb der vorgegebenen Zeit nicht anläuft, auf den maximal zulässigen Strom des Frequenzumformers begrenzt, und nach Ablauf der vorgegebenen Zeit der Frequenzumformer auf eine niedrigere Startfrequenz und/oder Startspannung abgesenkt, bis der Strom kleiner als der beim Anlaufen zulässige Maximalstrom ist.

Hierzu werden vorzugsweise die Frequenz und die Spannung in einer Spannungs-Frequenz-Rampe abgesenkt, bis der Strom kleiner als der zulässige Maximalstrom ist.

In bevorzugter Weiterbildung der Erfindung werden anschließend nach dem Absenken des Stroms unter den zulässigen Maximalstrom die Frequenz und die Spannung in einer Spannungs-Frequenz-Rampe wieder erhöht, bis die Nennfrequenz und die Nennspannung erreicht werden.

Auf diese Weise wird ein möglichst schnelles Anlaufen der Asynchronmaschine auch in einem solchen Fall gewährleistet, in dem die Asynchronmaschine zunächst innerhalb der vorgegebenen Zeit nicht anläuft.

Eine derartige Asynchronmaschine kann vorteilhaft bei Elektrowerkzeugen eingesetzt werden, bei denen eine besonders hohe Robustheit und Leistung gefordert ist. Eine vorteilhafte Anwendung besteht bei Winkelschleifern, jedoch ist die erfindungsgemäße Asynchronmaschine für beliebige Arten von Elektrowerkzeugen geeignet, wie etwa Bohrmaschinen, Sägen, Schrauber, Gradschleifer usw.

Zusätzlich kann eine Wiedereinschaltsperre für die Asynchronmaschine vorgesehen sein.

Gemäß einer weiteren Ausführung des erfindungsgemäßen Verfahrens werden dann, wenn der Strom am Ausgang des Frequenzumformers einen vorbestimmten Grenzwert überschreitet, die Frequenz und die Spannung am Ausgang kontinuierlich reduziert, bis der Strom den Grenzwert wieder unterschreitet, und anschließend Strom und Frequenz kontinuierlich wieder hoch geregelt, bis maximal der Grenzwert wieder erreicht ist.

Hierbei erfolgt das Absenken von Frequenz und Strom vorzugsweise langsamer als ein nachfolgendes Hochfahren.

Durch diese Maßnahmen wird die Ausgangsleistung des Frequenzumformers vorteilhaft begrenzt. Auf eine Abschaltung des Frequenzumformers wegen Selbstschutz bei Überlast kann verzichtet werden. Der Nutzer kann somit weiter arbeiten und die Belastung selbst reduzieren. Der Nutzer spürt die Leistungsgrenze in Folge der geringer werdenden Drehzahl und kann sich so selbst an die geringere Leistung zur Vermeidung der Überlast anpassen.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Figur 1: einen Flow-Chart, der den Ablauf in verschiedenen Phasen beim Anlaufen der erfindungsgemäßen Asynchronmaschine zeigt;
- Figur 2a): eine Darstellung von Frequenz f, Strom I, Drehzahl n über der Zeit t für den Fall, dass eine Asynchronmaschine zum Zeitpunkt t₀ mit der Nennfrequenz f_{Nenn} eingeschaltet ist und ohne weiteres anläuft;
- Figur 2b): ein Diagramm gemäß Figur 2a), jedoch für den Fall, dass die Asynchronmaschine zum Zeitpunkt des Einschaltens noch ausläuft;
- Figur 2c): ein Diagramm gemäß Figur 2a), jedoch für den Fall, dass die Asynchronmaschine schlecht anläuft, so dass Frequenz f und Spannung U des Frequenzumformers zunächst reduziert werden, bis die Stromaufnahme I unter den maximal zulässigen Strom I₀ je Anlaufphase absinkt;
- Figur 3: eine Ansicht eines Zweihand-Winkelschleifers mit einer erfindungsgemäßen Asynchronmaschine und einem zugeordneten externen statischen Frequenzumformer und
- Figur 4: ein Diagramm, dass den Verlauf von Strom, Drehzahl, Frequenz und Spannung im Überlastfall zeigt.

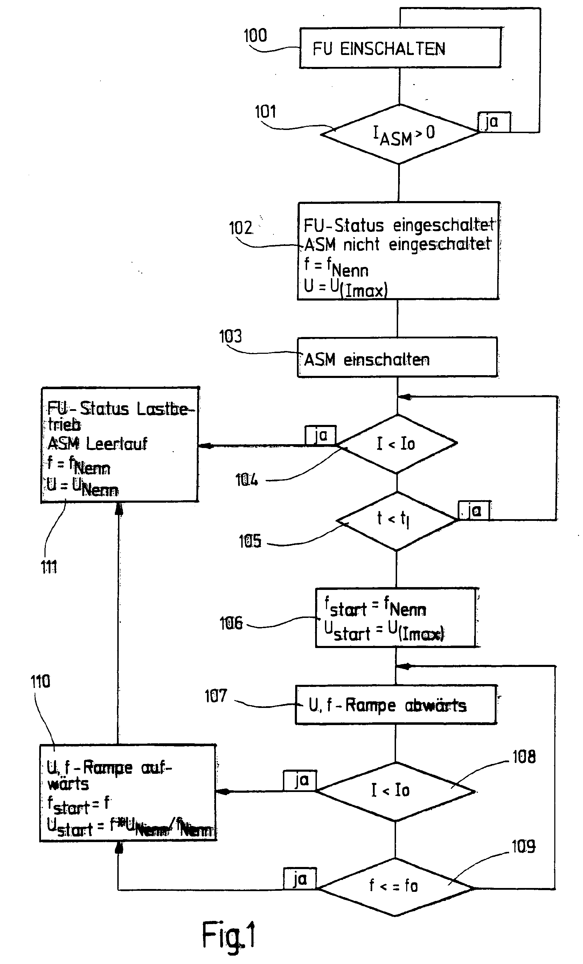

Figur 1 zeigt einen Flow-Chart (Ablaufdiagramm) zum Betrieb eines erfindungsgemäßen Elektrowerkzeuges mit einem statischen Frequenzumformer.

Der Frequenzumformer FU ist vorzugsweise als statischer Frequenzumformer ausgebildet und treibt als externes Gerät vorzugsweise jeweils eine Asynchronmaschine an, die über eine geeignete Kabelverbindung daran angeschlossen ist. Grundsätzlich kann ein Frequenzumformer jedoch auch mehrere Asynchronmaschinen versorgen.

Das erfindungsgemäße Verfahren zum Hochfahren einer Asynchronmaschine sei im Folgenden anhand von Figur 1 näher erläutert.

Zum Startzeitpunkt wird zunächst der Frequenzumformer FU eingeschaltet (Kästchen 100). Es wird dann in einer Verzweigung 101 zunächst abgewartet, bis die Asynchronmaschine ASM ausgeschaltet ist. Falls die ASM eingeschaltet ist (Motorstrom I_{ASM}>0), erfolgt eine Schleife zurück zum Kästchen 100. Ist die Asynchronmaschine ASM jedoch nicht eingeschaltet, so geht es weiter mit dem Status eingeschalteter Frequenzumformer und ausgeschaltete Asynchronmaschine (Kästchen 102). Der Umformer läuft mit der Frequenz f=f_{Nenn} und der Spannung U=U(_{Imax}).

Mit dem Kästchen 100 und der Verzweigung 101 wird so eine Wiedereinschaltsperre realisiert.

Als nächstes wird die Asynchronmaschine ASM eingeschaltet (Kästchen 103). Dann erfolgt in der Verzweigung 104 eine Abfrage, ob der Strom I kleiner ist als ein maximal zulässiger Strom I₀ für die Anlaufphase der Asynchronmaschine. Der maximal zulässige Strom I₀ während der Anlaufphase kann beispielsweise das 1,5-fache des Leerlaufstroms der Asynchronmaschine betragen. Ist I < I₀, so führt dies schließlich zum FU-Status Lastbetrieb und ASM Leerlauf mit f=f_{Nenn} und U=U_{Nenn}, d.h. die Asynchronmaschine läuft mit der Nenn-Leerlaufdrehzahl und der Nenn-Leerlaufspannung.

Ist die Zeit t noch kleiner als eine vorgegebene Zeitspanne t₁ (vorzugsweise 3 Sekunden), was in der nachfolgenden Verzweigung 105 abgefragt wird, so führt eine Schleife zurück zur Abfrage 104. Ist der Strom I nach wie vor größer als I₀ und die Zeit t wird größer als t₁, so führt die Verzweigung 105 zum Kästchen 106, d.h. ausgehend von der Frequenz fₛₜₐᵣₜ=f_{Nenn}, also der Nenn-Leerlaufdrehzahl und der Spannung Uₛₜₐᵣₜ = U_{(Imax)} wird in dem nachfolgenden Kästchen 107 die Spannung und die Frequenz in einer U,f-Rampe in vorgegebener Weise abwärts gefahren.

Es schließt sich wiederum die Abfrage 108 an, ob der Strom kleiner als der zulässige Strom I₀ beim Anfahren wird. Ist dies nicht der Fall, so wird in der nachfolgenden Verzweigung 109 abgefragt, ob die Frequenz f kleiner/gleich der Mindestdrehzahl fo des Frequenzumformers FU ist, wobei es sich beispielsweise um 50 Hz handeln kann. Ist dies nicht der Fall, so führt die Verzweigung zurück zum Absenken von Spannung und Frequenz gemäß Kästchen 107. Unterschreitet der Strom I den maximal zulässigen Strom beim Anfahren (I < I₀) in der nachfolgenden Verzweigung 108, so schließt sich im Kästchen 110 eine Aufwärts-Rampe an, in dem die Frequenz f und die Spannung in definierter Weise hochgefahren werden. Die Startfrequenz fₛₜₐᵣₜ entspricht der tatsächlichen Frequenz f. Die Startspannung Uₛₜₐᵣₜ entspricht dem Quotienten f•U_{Nenn} / f_{Nenn}.

Die U,f-Rampe 110 wird weiter hochgefahren, bis schließlich bei 111 die Asynchronmaschine vollständig angelaufen ist und der Läufer mit f=f_{Nenn} läuft und die Spannung der Leerlaufspannung U_{Nenn} entspricht.

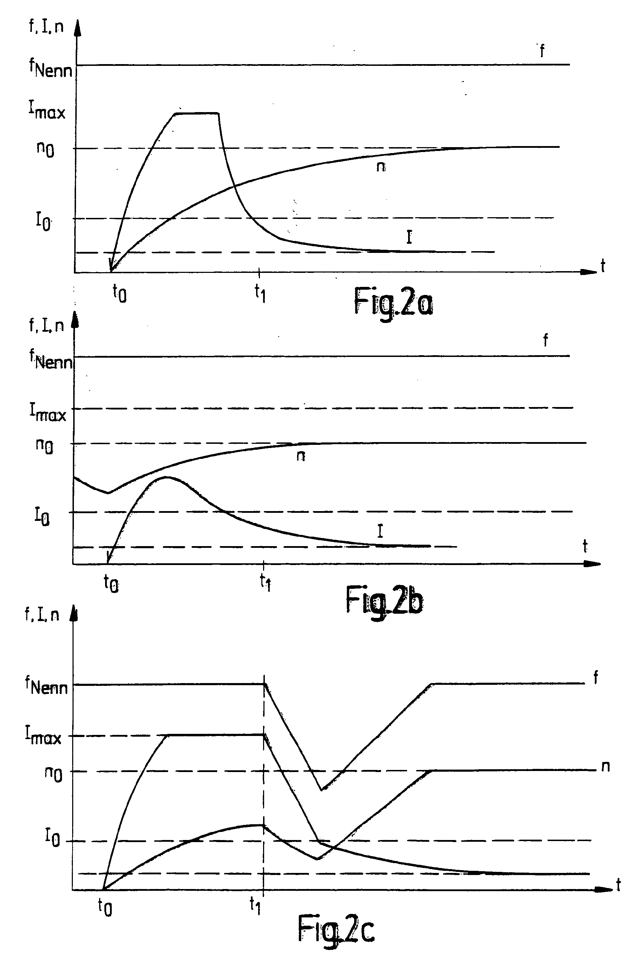

Die verschiedenen möglichen Zustände, die gemäß dem Flow-Chart gemäß Figur 1 auftreten können, werden im Folgenden anhand der Figuren 2a) bis 2c) erläutert.

Figur 2a) zeigt den Normalfall, bei dem eine im Stillstand befindliche Asynchronmaschine ASM eingeschaltet wird, während der Frequenzumformer mit der Nennfrequenz f_{Nenn} und der Spannung U=U von (Iₘₐₓ) läuft. Die Maschine läuft langsam an, d.h. der Läufer bewegt sich mit der Drehzahl n, die allmählich bis auf die Leerlaufdrehzahl n₀ hoch läuft. Der Strom I steigt allmählich an, bis der maximal zulässige Strom des Frequenzumformers Iₘₐₓ erreicht ist, wird zunächst auf diesen Maximalwert Iₘₐₓ begrenzt und fällt dann schließlich infolge der zunehmenden Drehzahl des Läufers ab, so dass schon vor Erreichen der Zeit t₁ (beispielsweise 3 Sekunden) der Strom I niedriger als der zulässige Anlaufstrom I₀ ist und schließlich auf einen noch kleineren Wert absinkt, der sich im stationären Leerlaufbetrieb ergibt.

Figur 2b) zeigt eine entsprechende Situation beim Einschalten einer Asynchronmaschine, die sich beim Einschalten noch im Lauf befindet. Die Asynchronmaschine dreht sich noch mit einer gewissen Drehzahl n aufgrund der Trägheit des Läufers. Zum Zeitpunkt t₀ wird die Asynchronmaschine ASM eingeschaltet, während der Frequenzumformer FU mit der Frequenz f_{Nenn} läuft. Hierdurch wird der Läufer beschleunigt, so dass die Drehzahl als auch die Leerlaufdrehzahl no ansteigt. Der Strom I steigt zunächst an, überschreitet zunächst den zulässigen Anlauf-Strom I₀, sinkt jedoch bis zum Zeitpunkt t₁ (z.B. 3 Sekunden) auf einen Wert unterhalb von I₀ ab, bis sich schließlich ein konstanter Leerlaufstrom I unterhalb von I₀ einstellt.

Dadurch, dass der Frequenzumformer FU mit seiner Nennfrequenz läuft, ergibt sich auch bei auslaufender Asynchronmaschine kein abruptes Abbremsen, sondern ein allmähliches Hochlaufen bis auf die Nenn-Leerlaufdrehzahl no. Dies ist für solche Fälle von Bedeutung, in denen die Asynchronmaschine etwa zum Antrieb eines Winkelschleifers verwendet wird. Es wird nämlich in einem solchen Fall ein abruptes Abbremsen im Gegensatz zum Stand der Technik vermieden, so dass sich die Einspannung einer Schleifscheibe nicht lösen kann.

In Figur 2c) ist nun der Fall dargestellt, der sich ergibt, wenn die Asynchronmaschine zunächst nicht anläuft. Der Frequenzumformer FU läuft mit seiner Nennfrequenz F_{Nenn} von z.B. 300 Hz.. Der Strom I steigt vom Zeitpunkt t₀ des Einschaltens der Asynchronmaschine ASM schnell an, bis ein zulässiger Maximalstrom des Frequenzumformers Iₘₐₓ erreicht ist, auf den der Strom begrenzt wird. Die Drehzahl n steigt zwar allmählich an, jedoch ergibt sich nur ein relativ geringer Anstieg der Drehzahl n bis zum Zeitpunkt t₁, da die Asynchronmaschine schlecht anläuft. Der Strom I liegt zum Zeitpunkt t₁ noch weit oberhalb des zulässigen Maximalstroms I₀ beim Anlaufen der Asynchronmaschine und wird auf Iₘₐₓ begrenzt. Ab dem Zeitpunkt t₁ erfolgt nun eine U,f-Rampe abwärts, d.h. eine Absenkung der Frequenz f und der Spannung U in definierter Weise, bis schließlich der Strom auf den zulässigen Maximalstrom I₀ beim Hochfahren der Asynchronmaschine abgefallen ist. Ab diesem Zeitpunkt wird die Maschine weiter beschleunigt, indem sich eine U,f-Rampe aufwärts anschließt, die Frequenz f also in definierter Weise wieder bis auf die Nennfrequenz f_{Nenn} hochgefahren wird, während gleichzeitig die Spannung bis auf die Nennfrequenz U_{Nenn} hochgefahren wird. Während des Hochfahrens der Frequenz bis auf die Nennfrequenz steigt in entsprechender Weise die Drehzahl n bis auf die Nenndrehzahl no an. Gleichzeitig sinkt der Strom I auf einen Wert unterhalb von I₀ ab, bis ein gleichbleibender Strom I erreicht ist. Das Hochfahren der Asynchronmaschine ist damit abgeschlossen.

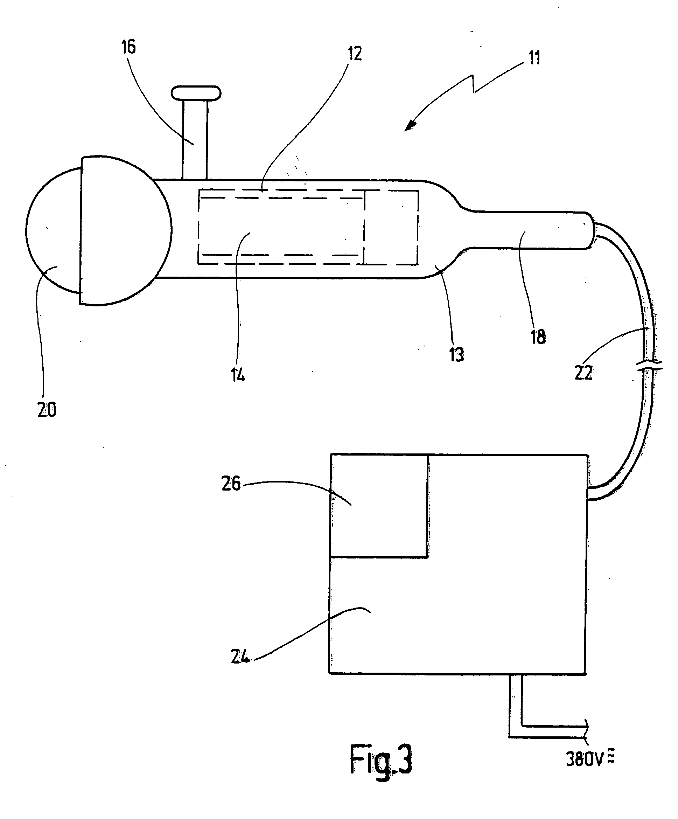

In Figur 3 ist ein Elektrowerkzeug schematisch dargestellt, das in der zuvor dargestellten Weise mit einem Frequenzumformer betrieben wird. Bei dem insgesamt mit 11 bezeichneten Elektrowerkzeug handelt es sich um einen Zweihand-Winkelschleifer mit einem Gehäuse 13, in dem eine Asynchronmaschine 12 mit einem Läufer 14 aufgenommen ist, der über ein Getriebe das Werkzeug, in diesem Fall eine Schleifscheibe 20, antreibt. Der Zweihand-Winkelschleifer muss mit zwei Händen gleichzeitig gehalten werden, etwa an einem Stielhandgriff 16 und an einem rückwärtigen Handgriff 18. Es können Schalter in dem Stielhandgriff 16 und dem rückwärtigen Handgriff 18 integriert sein, um sicherzustellen, dass ein Anlaufen nur dann ermöglicht ist, wenn beide Handgriffe 16, 18 gleichzeitig ergriffen werden. Die Asynchronmaschine 12 wird über eine Kabelverbindung 22 vom Frequenzumformer 24 gespeist. Zur Steuerung des Frequenzumformers 24 dient eine mikroprozessorgesteuerte Steuereinheit 26. In der Regel wird der Frequenzumformer 24 mittels Drehstrom von 380 Volt gespeist.

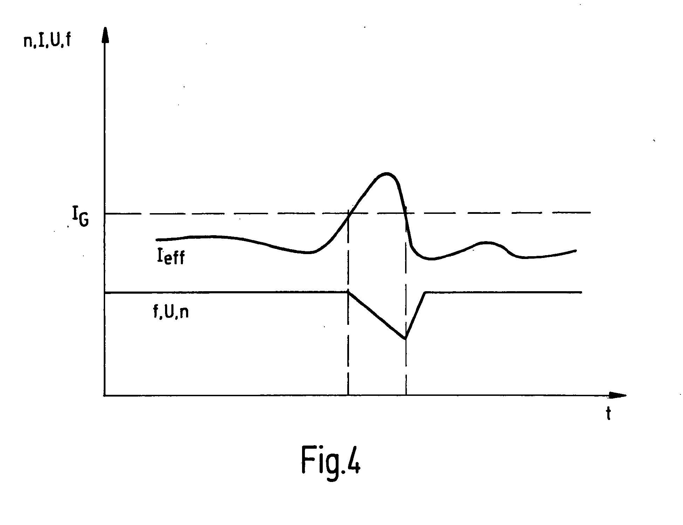

In Fig. 4 ist ein Diagramm dargestellt, dass das Verhalten von Strom I, Spannung U, Frequenz f und Drehzahl n im Überlastbereich zeigt.

Überschreitet der vom Asynchronmotor aufgenommene Strom I_{eff} einen vorbestimmten Grenzwert I_{G}, so werden die Frequenz f und der Strom I automatisch kontinuierlich abgesenkt, bis der Grenzwert I_{G} wieder unterschritten wird.

Anschließend werden die Frequenz f und der Strom Ieff wieder bis maximal auf den Grenzwert hoch geregelt. Hierbei erfolgt das Hochregeln vorzugsweise deutlich schneller, als das vorherige Absenken.

Auf diese Weise kann auf eine Abschaltung des Frequenzumformers 24 im Überlastfall verzichtet werden. Stattdessen wird der Überlastzustand dem Nutzer durch den deutlichen Drehzahlabfall signalisiert und dieser kann die Belastung dann selbst in geeigneter Weise reduzieren.

## Patentansprüche

1. Verfahren zum Betreiben einer Asynchronmaschine (12) an einem Frequenzumformer (24), bei dem der Frequenzumformer (24), wenn die Asynchronmaschine (12) innerhalb einer vorgegebenen Zeit t=t₁ ab dem Einschalten nicht anläuft, auf eine niedrigere Startfrequenz fₛₜₐᵣₜ und/oder Startspannung Uₛₜₐᵣₜ abgesenkt wird, bis der Strom I unter einen beim Anlaufen zulässigen Maximalstrom I₀ absinkt, und anschließend die Frequenz f und/oder die Spannung U wieder erhöht wird, bis die Asynchronmaschine (12) anläuft.

2. Verfahren nach Anspruch 1, bei dem der Frequenzumformer beim Einschalten der Asynchronmaschine mit Nennfrequenz f_{Nenn} läuft.

3. Verfahren nach Anspruch 1 oder 2, bei dem der Strom I, wenn die Asynchronmaschine (12) innerhalb der vorgegebenen Zeit t=t₁ nicht anläuft, auf den maximal zulässigen Strom des Frequenzumformers I=Iₘₐₓ begrenzt wird, und bei Erreichen von t=t₁ der Frequenzumformer auf eine niedrigere Startfrequenz fₛₜₐᵣₜ und/oder Startspannung Uₛₜₐᵣₜ abgesenkt wird, bis der Strom I kleiner als der beim Anlaufen zulässige Maximalstrom I₀ ist.

4. Verfahren nach Anspruch 1, 2 oder 3, bei dem, wenn die Asynchronmaschine (12) innerhalb der vorgegebenen Zeit t=t₁ nicht anläuft, die Frequenz und die Spannung in einer Spannungs-Frequenz-Rampe abgesenkt werden, bis der Strom I kleiner als der Maximalstrom I₀ ist.

5. Verfahren nach Anspruch 4, bei dem die Frequenz und die Spannung nach Absinken des Stroms unter den Maximalstrom I₀ in einer Spannungs-Frequenzrampe erhöht werden, bis die Nennfrequenz f_{Nenn} und die Nennspannung U_{Nenn} erreicht werden.

6. Verfahren nach einem der vorhergehenden Ansprüche, bei dem dann, wenn der Strom I am Ausgang des Frequenzumformers (24) einen vorbestimmten Grenzwert I_{G} überschreitet, die Frequenz und die Spannung am Ausgang kontinuierlich reduziert werden, bis der Strom den Grenzwert I_{G} wieder unterschreitet, und bei dem anschließend Strom und Frequenz kontinuierlich wieder hoch geregelt werden, bis maximal der Grenzwert I_{G} erreicht ist.

7. Verfahren nach Anspruch 6, bei dem das Absenken von Frequenz und Strom langsamer als ein nachfolgendes Hochfahren erfolgt.

8. Asynchronmaschine mit einem Frequenzumformer (24) und mit einer Steuereinheit (26), die dazu ausgebildet ist, wenn die Asynchronmaschine (12) beim Einschalten innerhalb einer vorgegebenen Zeit t=t₁ nicht anläuft, den Frequenzumformer (24) auf eine niedrigere Startfrequenz fₛₜₐᵣₜ und/oder Startspannung Uₛₜₐᵣₜ abzusenken, bis der Strom I unter einen beim Hochlaufen zulässigen Maximalstrom I₀ absinkt, und anschließend die Frequenz und/oder die Spannung wieder zu erhöhen, bis die Asynchronmaschine (12) anläuft.

9. Asynchronmaschine nach Anspruch 8, bei dem die Steuereinheit (26) dazu ausgebildet ist, wenn die Asynchronmaschine (12) innerhalb der vorgegebenen Zeit t=t₁ nicht anläuft, den Strom I auf den maximal zulässigen Strom des Frequenzumformers I=Iₘₐₓ zu begrenzen, und bei Erreichen von t=t₁ den Frequenzumformer (24) auf eine niedrigere Startfrequenz fₛₜₐᵣₜ und/oder Startspannung Uₛₜₐᵣₜ abzusenken, bis der Strom I kleiner als der beim Hochlaufen zulässige Maximalstrom I₀ ist.

10. Asynchronmaschine nach Anspruch 8 oder 9, bei dem die Steuereinheit (26) dazu ausgebildet ist, wenn die Asynchronmaschine (12) innerhalb der vorgegebenen Zeit t=t₁ nicht anläuft, die Frequenz und die Spannung des Frequenzumformers (24) in einer Spannungs-Frequenz-Rampe abzusenken, bis der Strom I kleiner als der Maximalstrom I₀ ist.

11. Asynchronmaschine nach Anspruch 10, bei der die Steuereinheit (26) dazu ausgebildet ist, wenn die Asynchronmaschine (12) innerhalb der vorgegebenen Zeit t=t₁ nicht anläuft, die Frequenz und die Spannung des Frequenzumformers (24) nach Absinken des Stroms unter den Maximalstrom I₀ in einer Spannungs-Frequenzrampe zu erhöhen, bis die Nennfrequenz f_{Nenn} und die Nennspannung U_{Nenn} erreicht werden.

12. Asynchronmaschine nach einem der Ansprüche 8 bis 11, mit einer Wiedereinschaltsperre (100, 101) für die Einschaltung der Maschine.

13. Asynchronmaschine nach einem der vorhergehenden Ansprüche, bei der die Steuereinheit (26) dazu ausgebildet ist, dann, wenn der Strom I am Ausgang des Frequenzumformers (24) einen vorbestimmten Grenzwert I_{G} überschreitet, die Frequenz und die Spannung am Ausgang kontinuierlich zu reduzieren, bis der Strom den Grenzwert I_{G} wieder unterschreitet, und dann Strom und Frequenz kontinuierlich wieder hoch zu regeln, bis maximal der Grenzwert I_{G} erreicht ist.

14. Asynchronmaschine nach Anspruch 13, bei der die Steuereinheit (26) dazu ausgebildet ist, das Absenken von Frequenz und Strom langsamer als ein nachfolgendes Hochfahren zu regeln.

15. Elektrowerkzeug mit einer Asynchronmaschine (12) nach einem der Ansprüche 8 bis 14.
